# EUROPEAN PATENT APPLICATION

(11) **EP 4 588 798 A1**
(43) Date of publication of application: **23.07.2025**
(21) Application number: 24152325.7
(22) Date of filing: 17.01.2024
(51) Int. Cl.: B64D 11/06, B60N 2/015, B60N 2/07

(54) **AIRCRAFT SEAT CONNECTOR, AIRCRAFT SEAT, AIRCRAFT, AND METHOD OF MOUNTING AN AIRCRAFT SEAT TO AN AIRCRAFT**

(71) Applicant: B/E Aerospace Fischer GmbH, 84034 Landshut (DE)
(72) Inventor: AKDENIZ, Sinan, 84034 Landshut (DE); HACKER, Herbert, 84034 Landshut (DE); WIELAND, Melanie, 84034 Landshut (DE); KALISZCZYK, Piotr Krzysztof, 51-317 Wroclaw (PL)
(74) Representative: Schmitt-Nilson Schraud Waibel Wohlfrom Patentanwälte Partnerschaft mbB

(57) **Abstract**

An aircraft seat connector (40) for mounting an aircraft seat (20) to a mounting rail (17) provided at a floor of an aircraft cabin (16) comprises: a seat connection element (60) for being mounted to the aircraft seat (20); and a base element (41) for being mounted to the mounting rail (17). The base element (41) comprises a seat coupling portion (50), which is configured for receiving a mating portion (65) of the seat connection element (60) in at least two different spatial orientations, with the seat coupling portion (50) thus allowing for arranging the seat connection element (60) on the base element (41) in at least two different spatial orientations.

## Description

The present invention is in the field of aircraft seats. In particular, the present invention relates to an aircraft seat connector for mounting an aircraft seat to a mounting rail provided in an aircraft. The present invention further relates to an aircraft seat, to an aircraft comprising an aircraft seat, and to a method of mounting an aircraft seat to an aircraft.

Aircraft, such as airplanes and helicopters, are equipped with aircraft seats for pilot(s) and passengers. Aircraft seat connectors may be used for mounting the aircraft seats to mounting rails that extend through the aircraft. Depending on the configuration of the aircraft and the aircraft seats, there may be a desire to mount the aircraft seats to the mounting rails in different ways.

It would therefore be beneficial to provide aircraft seat connectors which allow for mounting aircraft seats to mounting rails, provided in an aircraft, with a high degree of flexibility.

Exemplary embodiments of the invention include an aircraft seat connector for mounting an aircraft seat to a mounting rail, provided at a floor of an aircraft cabin. The aircraft seat connector comprises: a seat connection element for being mounted to an aircraft seat, and a base element for being mounted to the mounting rail. The seat connection element and the base element may in particular be configured for being releasably mounted to the aircraft seat and to the mounting rail, respectively.

The base element comprises a seat coupling portion, which is configured for receiving a mating portion of the seat connection element in at least two different spatial orientations. The seat coupling portion thus allows for arranging the seat connection element on the base element in at least two different spatial orientations. The seat coupling portion may in particular have a geometric shape, which allows the seat coupling portion to receive the mating portion of the seat connection element in at least two different spatial orientations.

In an aircraft seat connector according to an exemplary embodiment of the invention, the seat connection element is releasably mountable to the base element in at least two different spatial orientations, and the coupling between the seat connection element and the base element can be achieved in each of the at least two different spatial orientations.

In the context of the present invention, two or more spatial orientations of the seat connection element with respect to the base element are considered different spatial orientations only if they result in distinguishable configurations of the aircraft seat connector. The configurations of the aircraft seat connector are considered distinguishable if they result in different orientations of an aircraft seat, which is mounted to the seat connection element of the aircraft seat connector, with respect to the mounting rail.

For example, in case the mating portion of the seat connection element can be received in two spatial orientations, which differ in a rotation of the seat connection element by 90°, and the aircraft seat can thus be mounted in two different orientations, which also differ in a rotation of the aircraft seat by 90°, these two spatial orientations are considered different spatial orientations. In this example, distinguishable configurations of the aircraft seat connector can be achieved by different spatial orientations of the mating portion / of the seat connection element.

In another example, in case the seat connection element has such a rotational symmetry that rotating the seat connection element by 180 ° results in the same configuration of the aircraft seat connector, two configurations, which differ only in the seat connection element being rotated by 180 °, are not considered as two different spatial orientations in the sense of the present document.

On the other hand, in case the seat connection element does not have such a rotational symmetry, rotating the seat connection element by 180 ° may result in a different configuration of the aircraft seat connector. In this case, the rotated orientation of the seat connection element may result in a different orientation of the aircraft seat with respect to the mounting rail. In consequence, the rotated orientation is considered a different spatial orientation.

The aircraft seat connector may also be referred to as a fitting, which is provided for coupling the aircraft seat to the mounting rail.

Exemplary embodiments of the invention also include an aircraft seat comprising a mounting portion, which is configured for coupling the aircraft seat to the seat connection element of an aircraft seat connector according to an exemplary embodiment of the invention.

Exemplary embodiments of the invention further include a method of mounting an aircraft seat to a mounting rail provided at a floor of an aircraft cabin, wherein the method comprises:
- mounting a base element of an aircraft seat connector to the mounting rail, wherein mounting the base element to the mounting rail in particular includes introducing a mounting rail coupling portion of the base element into the mounting rail;
- mounting a seat connection element of the aircraft seat connector to the aircraft seat, in particular to a mounting portion of the aircraft seat; and
- coupling the seat connection element to a seat coupling portion of the base element, with the seat coupling portion receiving a mating portion of the seat connection element in a particular one of at least two different potential spatial orientations.

The above mentioned steps may be executed in any arbitrary order: The seat connection element of the aircraft seat connector may, for example, be mounted to the aircraft seat, before or after the seat connection element is coupled to the seat coupling portion of the base element. Similarly, the seat connection element of the aircraft seat connector may be mounted to the aircraft seat, before or after the mounting rail coupling portion of the base element is introduced into the mounting rail. And the mounting rail coupling portion of the base element may be introduced into the mounting rail, before or after the seat connection element is coupled to the seat coupling portion of the base element. In a particular embodiment, the method steps are carried out in the following order: coupling the seat connection element to the seat coupling portion of the base element of the aircraft seat connector; mounting the base element of the aircraft seat connector to the mounting rail; and mounting the seat connection element of the aircraft seat connector to the aircraft seat.

With exemplary embodiments of the invention, the same aircraft seat connector may be used for mounting an aircraft seat to the mounting rails, provided in an aircraft, in at least two different orientations. In consequence, the need for providing different aircraft seat connectors for mounting aircraft seats in different orientations to the aircraft may be eliminated.

As compared to previous approaches, where different aircraft seat connectors were used for mounting the aircraft seat to the mounting rail in different orientations, the need to use a particular aircraft seat connector for a particular orientation may be eliminated. Also, the need for replacing an existing aircraft seat connector, when the orientation of an aircraft seat in the aircraft cabin is changed, may be eliminated.

With an aircraft seat connector according to exemplary embodiments of the invention, the orientation of the aircraft seat with respect to a mounting rail may be changed without releasing the connection between the aircraft seat and the seat connection element of the aircraft seat connector and/or without releasing the connection between the base element of the aircraft seat connector and the mounting rail.

Overall, a high degree of flexibility in mounting aircraft seats to the mounting rails of an aircraft cabin may be achieved. Also, the number of different parts, which are in use for mounting aircraft seats to an aircraft, may be reduced. The assembly of aircraft may thus be simplified, and the costs may be reduced.

In an embodiment, the seat coupling portion comprises a coupling surface and two side walls, extending from opposite edges of the coupling surface. The coupling surface may in particular be a planar coupling surface. The two opposing side walls may in particular extend substantially perpendicular / substantially orthogonal from the coupling surface. The coupling surface and the two opposing side walls may be configured for receiving the mating portion of the seat connection element in at least two different spatial orientations. More particularly, the coupling surface and the two opposing side walls may be arranged and dimensioned so that the seat coupling portion is able to receive the mating portion of the seat connection element in at least two different spatial orientations.

A seat coupling portion including a coupling surface and two side walls, which extend from opposite edges of the coupling surface, may provide for a particularly reliable seat coupling portion. In particular, such a seat coupling portion may allow for a secure and convenient coupling with a corresponding mating portion of the seat connection element.

In an embodiment, the coupling surface and the mating portion have a quadratic shape. A coupling surface having a quadratic shape and a mating portion having a quadratic shape have a four-fold rotational symmetry of 90 °, respectively. In consequence, the quadratic mating portion may be coupled to the quadratic coupling surface in four different orientations, which are rotated by 0 °, 90 °, 180 ° or 270 ° with respect to each other.

As discussed before, two orientations of the seat connection element, which have different rotational positions of the seat connection element , are considered as different spatial orientations only if the two orientations result in two distinguishable configurations of the aircraft seat connector. Such two distinguishable configurations of the aircraft seat connector result in different spatial orientations of an aircraft seat with respect to the mounting rail, when mounted to the seat connection element.

In an embodiment, one of the coupling surface and the mating portion has a quadratic shape, while the other one of the coupling surface and the mating portion does not have a quadratic shape. In particular, it is possible that one of the coupling surface and the mating portion has a quadratic shape, while the other one of the coupling surface and the mating portion has a rectangular shape. In particular, it is possible that the coupling surface has a rectangular or other suitable shape, while the mating portion has a quadratic shape. Despite only the mating portion having a quadratic shape, such a set-up allows for conveniently placing the mating portion on the coupling surface in four different orientations.

In an embodiment, the coupling surface has a first extension in the range of between 10 mm and 100 mm in a first dimension and a second extension in the range of between 10 mm and 100 mm in a second dimension. The coupling surface may, in particular, be a quadratic coupling surface, and it may have an extension in the range of between 10 mm x 10 mm and 100 mm x 100 mm. A coupling surface having an extension in the range of between 10 mm and 100 mm in each of its two dimensions has been found to be well suited for mounting an aircraft seat to a mounting rail in an aircraft cabin.

In an embodiment, each of the two opposing side walls comprises a lower wall portion, extending from the coupling surface, and an upper fastening portion, located at a distal end portion of the side wall, removed from the coupling surface. The upper fastening portion of each of the two opposing side walls may comprise a protrusion, extending over the coupling surface, thereby forming an undercut between the upper fastening portion and the coupling surface of the seat coupling portion. Providing such undercuts may allow for fixing the seat connection element to the base element in a particularly reliable manner by introducing opposite edges of the mating portion of the seat connection element into the undercuts, which are formed at the two opposing side walls.

Each of the protrusions may extend along the corresponding lower wall portion, forming an extended undercut, which runs along the the corresponding lower wall portion. Such extended undercuts may allow for a very strong and very reliable fixing of the seat connection element to the base element.

In an embodiment, the aircraft seat connector further comprises a fixing element, for releasably fixing the seat connection element to the base element. In particular, the fixing element may allow for coupling the seat connection element to the seat coupling portion of the base element in a fixed positional relationship. The fixing element may, for example, include a bolt or a screw.

In an embodiment, the fixing element extends from a bottom of the base element through the seat coupling portion of the base element, and further into the seat connection element, in particular into and/or through the mating portion of the seat connection element.

The fixing element may in particular extend into a blind hole, which is formed within the seat connection element and which is open to the side of the seat connection element facing the base element of the aircraft seat connector.

The fixing element and the blind hole may be provided with corresponding threads. This may allow for securely fixing the fixing element within the blind hole by screwing the fixing element into the blind hole.

In an embodiment, the mating portion of seat connection element comprises a coupling plate, which is configured for being received by the seat coupling portion of the base element in at least two different spatial orientations.

The coupling plate may have a quadratic shape.

The dimensions of the coupling plate may allow for the coupling plate to be received by the seat coupling portion of the base element in at least two different spatial orientations.

Two opposing edges of the coupling plate may be introduced into undercuts, which are formed at the two opposing side walls of the seat coupling portion. The coupling plate may, in particular, have suitable dimensions, which allow for introducing the coupling plate into the undercuts.

The coupling plate of the seat connection element and the seat coupling portion of the base element may be designed to allow for introducing the coupling plate into the undercuts in a sliding motion, with the coupling plate sliding along the coupling surface of the seat coupling portion.

In an embodiment, the mating portion comprises a slot arrangement for receiving the protrusions of the two opposing side walls. The slot arrangement may be a peripheral slot arrangement, i.e. a slot arrangement comprising slots, which extend at least along a portion of the outer periphery of the mating portion. The slot arrangement may comprise a plurality of slots, which, in combination, extend along the complete outer periphery of the mating portion.

In an embodiment, the mating portion may comprise four lateral surfaces, and the slot arrangement may comprise four slots, wherein each of the four slots may be formed in a different lateral surface of the mating portion.

In an embodiment, the seat connection element comprises a seat connection portion, which is configured for being coupled to the aircraft seat. Via the seat connection element, the seat connection element can be conveniently coupled to the aircraft seat. The seat connection portion of the seat connection element may in particular be configured for being releasably coupled to the aircraft seat.

In an embodiment, the seat connection portion comprises an opening for receiving a fastening element, for example a screw or a bolt, in order to allow for coupling the seat connection element to the aircraft seat. The opening may be a through hole / bore. The opening may in particular be a single opening or a single through hole or a single bore.

In an embodiment, the seat coupling portion is configured for receiving the mating portion of the seat connection element in two different spatial orientations, wherein said two different spatial orientations differ in a rotation of the mating portion of the seat connection element / in a rotation of the seat connection element by about 90°. The expression of a rotation by about 90° may be understood to mean that said two different spatial orientations may differ in a rotation of the mating portion of the seat connection element / in a rotation of the seat connection element by between 80° and 100°. In this way, the aircraft seat may be conveniently mounted to the mounting rail in two orientations that correspond to a rotation of the aircraft seat by about 90°. Accordingly, it is possible that, by choosing an appropriate configuration of the aircraft seat connector, the aircraft seat may be selectively oriented in a longitudinal direction of the aircraft or in a transverse direction of the aircraft. In an embodiment where the seat connection portion comprises a single opening for receiving a fastening element, as described above, the 90° rotation of the seat connection element may conveniently translate into a 90° rotation of the aircraft seat.

In an embodiment, the base element comprises a mounting rail coupling portion, which is configured for being introduced into the mounting rail, in order to allow for mounting the base element to the mounting rail. The mounting rail coupling portion may have a longitudinal extension, extending along a longitudinal extension of the mounting rail, and a transverse extension, extending perpendicular to said longitudinal extension.

In an embodiment, the mounting rail coupling portion has a longitudinal extension in the range of between 20 mm and 390 mm. In an embodiment, the mounting rail coupling portion has a transverse extension in the range of between 20 mm and 130 mm. Such dimensions of the mounting rail coupling portion have been found to be well suited for securely mounting the base element to a mounting rail provided in an aircraft.

In an embodiment, the coupling surface of the seat coupling portion extends in a plane, which is spanned by a longitudinal direction, which is aligned with the longitudinal extension of the mounting rail coupling portion, and by a transverse direction, which extends perpendicular to said longitudinal direction. The two opposing side walls may extend in the longitudinal direction or in the transverse direction. In such a set-up, the mating portion of the seat connection element may be introduced into the seat coupling portion of the base element either by a linear movement in the transverse direction, or by a linear movement in the longitudinal direction.

In an embodiment, the mounting rail coupling portion comprises at least one pair of wing-shaped protrusions. The wing-shaped protrusions may protrude laterally, i.e. in a direction transverse to the longitudinal direction of the mounting rail coupling portion, from the mounting rail coupling portion. The wing-shaped protrusions may be configured for sliding into corresponding undercuts, formed in the mounting rail, for engaging the mounting rail coupling portion with the mounting rail.

The wing-shaped protrusions may in particular protrude perpendicular to the longitudinal direction of the mounting rail coupling portion from the mounting rail coupling portion.

In an embodiment, the aircraft seat connector further comprises a fixing mechanism for fixing the mounting rail coupling portion to the mounting rail. The fixing mechanism may in particular by a spring driven fast fixing mechanism. Such a fixing mechanism may allow for securely fixing the mounting rail coupling portion to a mounting rail. It may further allow for releasing the mounting rail coupling portion from the mounting rail in a fast and convenient manner by releasing the fixing mechanism. This form of fixation may allow for changing the seat configuration in the aircraft cabin and/or replacing at least some of the aircraft seats in a particularly fast and convenient manner.

An aircraft seat according to an exemplary embodiment of the invention may comprise support legs for supporting the aircraft seat on a support, in particular on the mounting rails and/or on the floor of the aircraft cabin, and the mounting portion may be formed as part of said support legs. In particular, the aircraft seat may comprise a plurality of mounting portions, as described herein, and one or more of said plurality of mounting portions may be provided per support leg.

In an embodiment, the aircraft seat may comprise a support structure, for example a support frame, which is coupled to or integrally formed with the support legs, a seat pan, a seat back, a headrest, armrests and/or other components of an aircraft seat, as it is known in the art.

In an embodiment, the mounting portion of the aircraft seat comprises a recess for accommodating at least a part of the seat connection portion of the seat connection element of the aircraft seat connector. The recess may comprises two engagement portions. The two engagement portions may include two opposing walls or one wall and one blind hole for accommodating the fastening element.

In an embodiment, the aircraft seat is configured to be placed on the aircraft seat connector, with the recess being arranged over the seat connection element of the aircraft seat connector.

A fastening element, such as a screw or a bolt, may extend through or into each of the two engagement portions and through the seat connection portion of the seat connection element of the aircraft seat connector for fixing the aircraft seat to the seat connection element.

An aircraft seat according to an exemplary embodiment of the invention may be a helicopter seat or a seat of an airplane. The aircraft seat may be a pilot seat or a passenger seat.

In an embodiment, the aircraft seat connector is a helicopter seat connector for mounting a helicopter seat to a mounting rail provided at the floor of a helicopter cabin.

In an embodiment, the aircraft seat connector is an airplane seat connector for mounting an airplane seat to a mounting rail provided at a floor of a cabin of an airplane.

Exemplary embodiments of the invention further include an aircraft comprising an aircraft cabin for accommodating at least one pilot and/or at least one passenger. The aircraft may be an airplane or a helicopter.

At least one mounting rail may be provided at a floor of the aircraft cabin. At least one aircraft seat connector according to an exemplary embodiment of the invention may be employed for mounting and fixing at least one aircraft seat according to an exemplary embodiment of the invention to the at least one mounting rail.

The additional features, modifications and effects, described above with respect to aircraft seat connectors and aircraft seats according to exemplary embodiments of the invention, apply to such an aircraft in an analogous manner.

Further exemplary embodiments of the invention are described with respect to the accompanying drawings, wherein:
Figure 1 shows a schematic side view of an aircraft according to an exemplary embodiment of the invention.
Figures 2A shows a schematic plan view of the aircraft cabin of an aircraft with a first configuration of mounting rails.
Figures 2B shows a schematic plan view of the aircraft cabin of an aircraft with a second configuration of mounting rails.
Figure 3 shows a perspective view of an aircraft seat according to an exemplary embodiment of the invention.
Figure 4A shows an enlarged perspective view of the support legs of the aircraft seat of Figure 3, when engaged with aircraft seat connectors in accordance with an exemplary embodiment of the invention, with the aircraft seat connectors being oriented in a first orientation.
Figure 4B shows an enlarged perspective view of the support legs of the aircraft seat of Figure 3, when engaged with aircraft seat connectors in accordance with an exemplary embodiment of the invention, with the aircraft seat connectors being oriented in a second orientation.
Figure 5 shows a perspective view of an aircraft seat connector according to an exemplary embodiment of the invention.
Figure 6 shows a perspective, cut-open view of the aircraft seat connector depicted in Figure 5.
Figure 7A shows the aircraft seat connector of Figure 5 in a perspective view, with a support leg of an aircraft seat being mounted to the aircraft seat connector in a first orientation.
Figure 7B shows the aircraft seat connector of Figure 5 in a perspective view, with a support leg of an aircraft seat being mounted to the aircraft seat connector in a second orientation.
Figure 8A shows the arrangement of Figure 7A in a disassembled view.
Figure 8B shows the arrangement of Figure 7B in a disassembled view.
Figure 9 shows a perspective view of an aircraft seat connector according to a further exemplary embodiment of the invention.

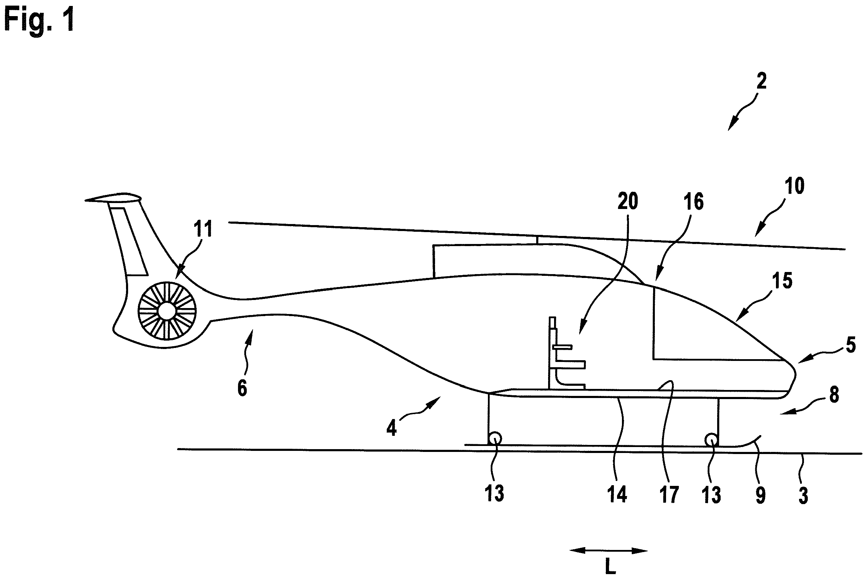

Figure 1 shows a schematic side view of an aircraft 2 in accordance with an exemplary embodiment of the invention. In the exemplary embodiment of Figure 1, the aircraft 2 is a helicopter. Although the aircraft 2, as shown in Figure 1, is a helicopter, the present invention may be similarly applied to other types of aircraft 2, in particular to airplanes.

The aircraft 2, as depicted in Figure 1, comprises a fuselage 4 that includes a front portion 5 or nose, a rear portion 6 or tail, and an aircraft cabin 16 formed between the front portion 5 and the rear portion 6. The aircraft cabin 16 may include a cockpit 15 for accommodating the pilot(s) of the aircraft 2 and a passenger cabin located behind the cockpit 15 for accommodating passengers. The passenger cabin is optional. The aircraft 2 may be provided without a passenger cabin, in case it is not intended for transporting passengers.

An undercarriage 8, mounted to an underside of the fuselage 4, supports the aircraft 2 on a ground 3. In the embodiment depicted in Figure 1, the undercarriage 8 comprises two skids 9, extending parallel to each other in a longitudinal direction L of the aircraft 2. In Figure 1, the longitudinal direction L extends horizontally, parallel to the ground 3, from left to right. Only one of the skids 9 is visible in the side view depicted in Figure 1. Alternatively or additionally to the skids 9, wheels 13 may by mounted to the undercarriage 8 for allowing the aircraft 2 to move on a solid ground 3.

The aircraft 2 comprises a main rotor 10 on top of the fuselage 4 and a tail rotor 11, provided in or at the rear portion 6 or tail of the fuselage 4. In an alternative embodiment, which is not depicted on the figures, the aircraft 2 may comprises two main rotors 10, arranged in a co-extensive manner on top of the fuselage 4.

A plurality of mounting rails 17 are mounted to a floor 14 of the aircraft cabin 16. In the embodiment depicted in Figure 1, the mounting rails 17 extend parallel to each other and parallel to the longitudinal direction L of the aircraft 2. Out of the plurality of mounting rails 17, only one mounting rail 17 is visible in the schematic side view depicted in Figure 1.

At least one aircraft seat 20 is mounted to the plurality of mounting rails 17.

The at least one aircraft seat 20 and the plurality of mounting rails 17 may be arranged in different configurations within the aircraft cabin 16.

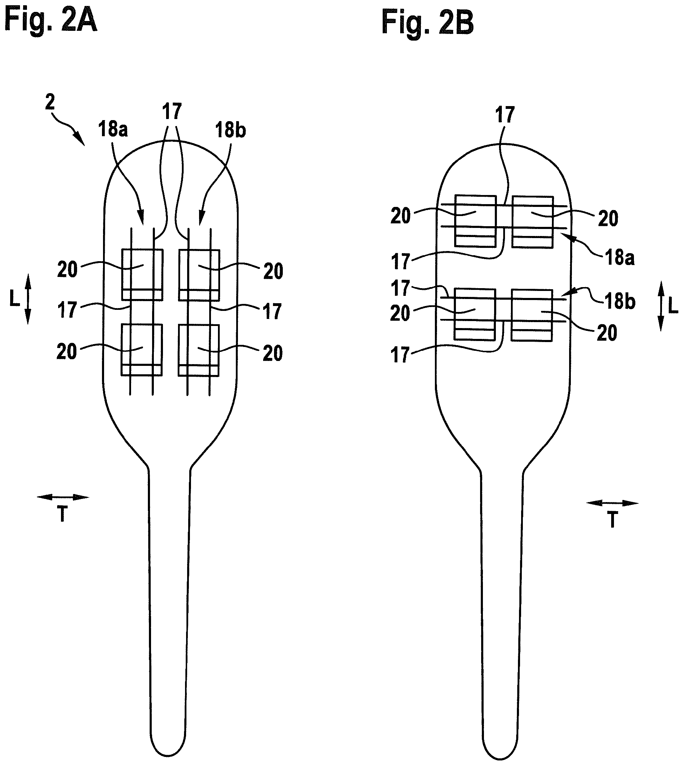

Two different configurations of mounting rails 17 and aircraft seats 20, which are mounted to the mounting rails 17, are exemplarily depicted in Figures 2A and 2B.

Each of Figures 2A and 2B shows a respective schematic plan view of the aircraft cabin 16 of the aircraft 2, with the rotors 10, 11 and the roof of the aircraft cabin 16 being removed, in order to allow for schematically showing the interior of the aircraft cabin 16.

In the configuration depicted in Figure 2A, four mounting rails 17 extend parallel to each other along the longitudinal direction L of the aircraft 2. The four mounting rails 17 are arranged as two pairs 18a, 18b of mounting rails 17, including a port-side pair 18a of mounting rails 17 and a starboard pair 18b of mounting rails 17. Two aircraft seats 20 are mounted to each of the two pairs 18a, 18b of mounting rails 17, respectively.

In the configuration depicted in Figure 2B, four mounting rails 17 extend parallel to each other along a transverse direction T of the aircraft 2, which is oriented transverse, in particular substantially orthogonal, to the longitudinal direction L. The four mounting rails 17 are arranged as two pairs 18a, 18b of mounting rails 17, including a forward pair 18a of mounting rails 17 and a rearward pair 18b of mounting rails 17. Two aircraft seats 20 are mounted to each of the two pairs 18a, 18b of mounting rails 17, respectively.

In the two aircraft seat configurations depicted in Figures 2A and 2B, the aircraft seats 20 are oriented differently with respect to the mounting rails 17. In particular, despite the mounting rails 17 having different orientations in the configurations depicted in Figures 2A and 2B, the aircraft seats are orientated to face forward, i.e. to face towards the front portion / nose of the aircraft 2, in both configurations.

The aircraft seat configurations depicted in Figures 2A and 2B are only exemplary. An aircraft 2 according to an exemplary embodiment of the invention may comprise more or less than two pairs 18a, 18b of mounting rails 17, and more or less than two aircraft seats 20 may be mounted to each pair 18a, 18b of mounting rails 17. Also, it is possible that different numbers of aircraft seats are mounted to the respective pairs of mounting rails. It is also possible that a larger number of mounting rails is provided, in order to support the mounting of aircraft seats with different widths / different support leg spacing.

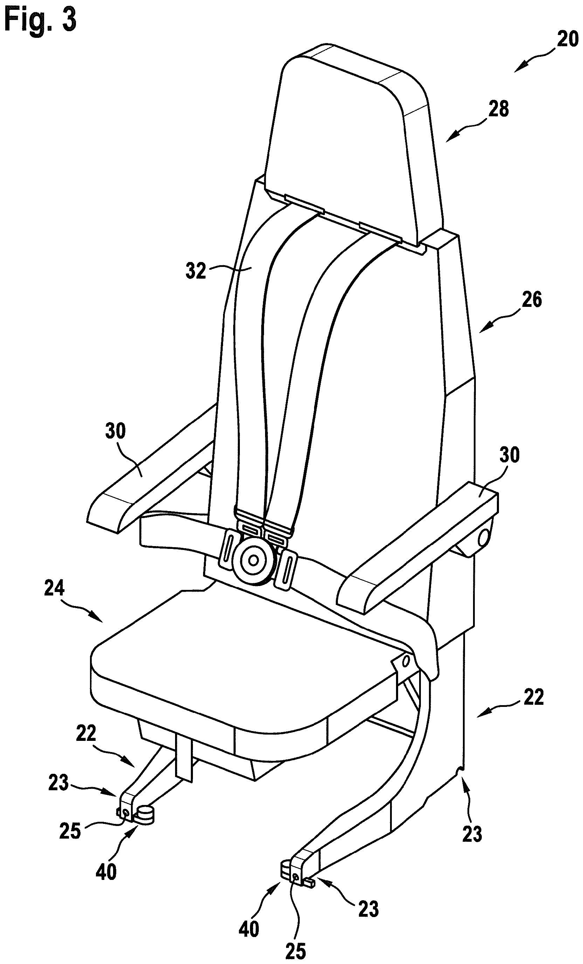

Figure 3 shows a perspective view of an aircraft seat 20 in accordance with an exemplary embodiment of the invention. The aircraft seat 20 may in particular be a helicopter seat. The aircraft seat 20 is configured for and is to be employed in an aircraft 2. The aircraft seat 20 may in particular be employed in an aircraft 2, as it is depicted in Figures 1, 2A, and 2B.

The aircraft seat 20 comprises two support legs 22 for supporting the aircraft seat 20 on mounting rails 17, as it is depicted in Figures 1, 2A, and 2B. The mounting rails 17 are not depicted in Figure 3.

The aircraft seat 20 further comprises a seat pan 24, a backrest 26, and a headrest 28, which is provided on top of the backrest 26. The aircraft seat 20 also comprises two foldable armrests 30, which are pivotably mounted to the backrest 26, and a harness 32, which allows for strapping a person securely to the aircraft seat 20. The harness 32 may also be referred to as a seat belt system. The mentioned components may be mounted to a support frame, which is provided on the inside of the backrest 26.

Each of the support legs 22 comprises two mounting portions 23 for mounting the aircraft seat 20 to the mounting rails 17, as it is depicted in Figures 1, 2A, and 2B.

Each of the mounting portions 23 includes a recess, which is formed within the respective support leg 22. Every recess is shaped for engaging with an aircraft seat connector 40, which is provided for mounting the respective support leg 22 to a mounting rail 17.

A fastening element 25, such as a bolt or a screw, extends through each of the mounting portions 23 and the associated aircraft seat connector 40 for fixing the aircraft seat connector 40 to the respective support leg 22.

Each recess may be channel-shaped, slot-shaped, trough-shaped, indentation-shaped or cavity-shaped. Each recess may in particular have a u-shaped cross-section.

Each recess is in particular shaped to allow for engagement with a seat connection element 60 of an aircraft seat connector 40. Via the aircraft seat connector 40, as described herein, an aircraft seat 20 can be selectively mounted in two different orientations with respect to the mounting rails 17, as it is schematically depicted in Figures 2A and 2B.

The mounting portions 23 may be provided with respective engagement portions, which are configured for engaging with the fastening element 25, when introducing the fastening element 25 into the mounting portion 23 of the respective support leg 22 of the aircraft seat 20. Each engagement portion may comprise an engagement opening that interacts with the fastening element 25. The engagement opening may be formed as a through hole through a wall of the engagement portion.

The engagement opening may also be a blind hole in the engagement portion. In the exemplary embodiment depicted in Figure 3, the fastening element 25 runs through an engagement opening of a wall, located at an end of the support leg, runs through a U-shaped channel, which forms above-mentioned recess, and extends into a blind hole located in the support leg. The engagement opening in the distal wall of the support leg and the blind hole form the two engagement portions in the exemplary embodiment of Figure 3.

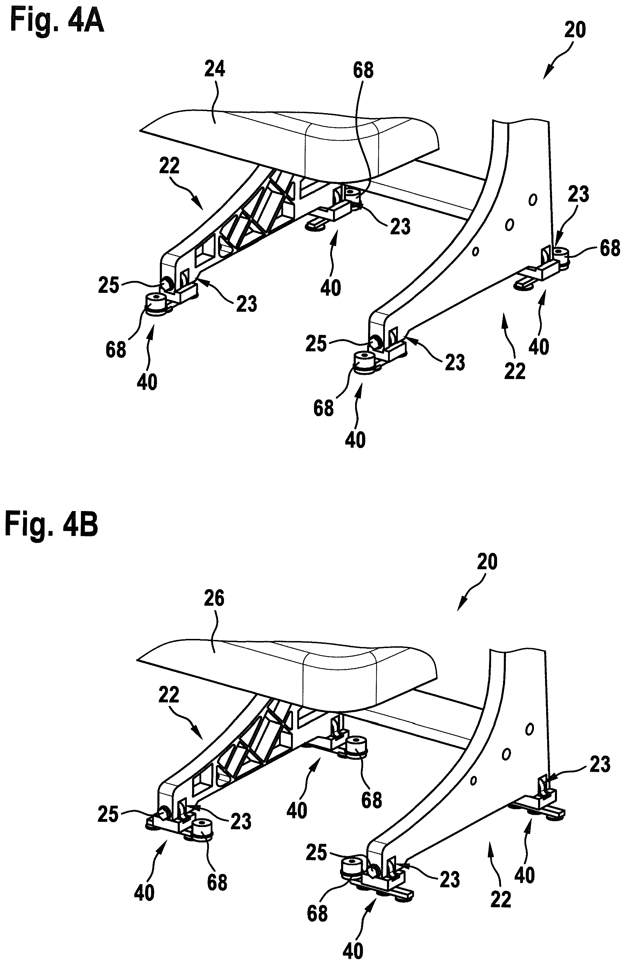

Figure 4A shows an enlarged perspective view of the support legs 22 of the aircraft seat 20 of Figure 3, with four aircraft seat connectors 40 according to an exemplary embodiment of the invention being engaged with the mounting portions 23 of the support legs 22 in a first orientation, which may be called a longitudinal configuration. In the longitudinal configuration, the aircraft seat 20 is mounted to the mounting rails 17, provided in the aircraft cabin 16 of the aircraft 2, in an orientation as it is schematically depicted in Figures 1 and 2A. In particular, the support legs 22 of the aircraft seat 20 are substantially aligned with the mounting rails 17 in the longitudinal configuration.

Figure 4B shows an enlarged perspective view of the support legs 22 of the aircraft seat 20 of Figure 3, with four aircraft seat connectors 40 according to an exemplary embodiment of the invention being engaged with the mounting portions 23 of the support legs 22 in a second orientation, which may be called a transverse configuration. In the transverse configuration, the four aircraft seat connectors 40 are rotated by 90 ° around a vertical axis, when compared to the longitudinal configuration. In the transverse configuration, the aircraft seat 20 is mounted to the mounting rails 17, provided in the aircraft cabin 16 of the aircraft 2, in an orientation as it is schematically depicted in Figure 2B. In particular, the support legs 22 of the aircraft seat 20 extend substantially orthogonal to the mounting rails 17 in the transverse configuration.

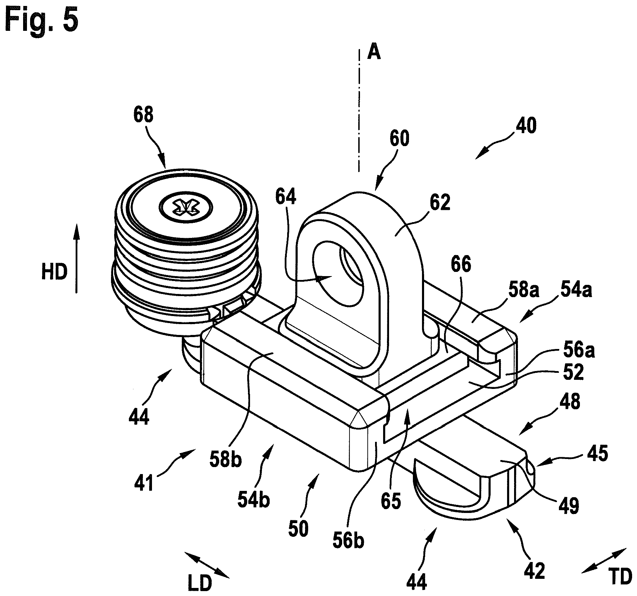

Details of aircraft seat connectors 40 according to exemplary embodiments of the invention are discussed in the following with reference to Figures 5 to 9.

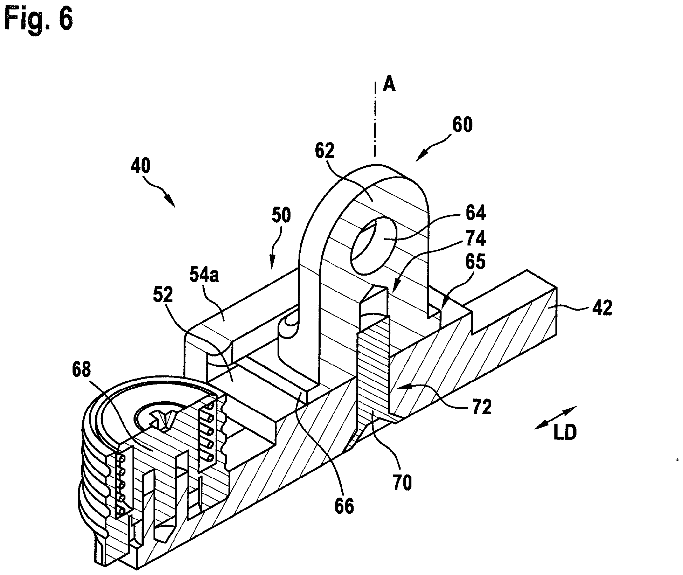

Figure 5 shows a perspective view of an aircraft seat connector 40 according to an exemplary embodiment of the invention. Figure 6 shows a perspective, cut-open view of the aircraft seat connector 40 depicted in Figure 5.

The aircraft seat connector 40, as shown in Figures 5 and 6, may be employed in the set-ups depicted in Figures 3, 4A, and 4B.

The aircraft seat connector 40 comprises a base element 41, which is configured for being releasably coupled to one of the mounting rails 17. The mounting rails 17 are not shown in Figures 5 and 6.

The base element 41 comprises a mounting rail coupling portion 42, which is configured for being introduced into one of the mounting rails 17. The mounting rail coupling portion 42 extends in a longitudinal direction LD of the aircraft seat connector 40.

When the aircraft seat connector 40 is mounted to a mounting rail 17, the longitudinal direction LD of the aircraft seat connector 40 extends along the longitudinal extension of said mounting rail 17.

In case the mounting rails 17 within the aircraft cabin 16 are oriented along the longitudinal direction L of the aircraft 2, the longitudinal direction LD of the aircraft seat connector 40 is aligned with the longitudinal direction L of the aircraft 2, when the aircraft seat connector 40 is mounted to the mounting rails 17, as it is depicted in Figure 2A.

In case the mounting rails 17 within the aircraft cabin 16 are oriented along the transverse direction T of the aircraft 2, the longitudinal direction LD of the aircraft seat connector 40 is aligned with the transverse direction T of the aircraft 2, when the aircraft seat connector 40 is mounted to the mounting rails 17, as it is depicted in Figure 2B.

The longitudinal direction LD of the aircraft seat connector 40 may extend along a different direction, for example along a diagonal direction, if the mounting rails 17 are oriented along such a different direction within the aircraft 2.

The mounting rail coupling portion 42 may have a longitudinal extension or length in the range of between 20 mm and 390 mm in the longitudinal direction LD, and the mounting rail coupling portion 42 may have a transverse extension or width in the range of between 20 mm and 130 mm in a transverse direction TD, which is oriented perpendicular to the longitudinal direction LD.

The mounting rail coupling portion 42 may have a height in the range of between 5 mm and 80 mm in a height direction HD, which is oriented perpendicular to the plane spanned by the longitudinal direction LD and the transverse direction TD.

A plurality of wing-shaped protrusions 44, 45 protrude laterally, i.e. transverse to the longitudinal direction LD, form the mounting rail coupling portion 42 of the aircraft seat connector 40. The wing-shaped protrusions 44, 45 may in particular protrude perpendicular to the longitudinal direction LD from the mounting rail coupling portion 42. The wing-shaped protrusions 44, 45 may be configured for sliding into corresponding undercuts, formed in the mounting rail 17, for securing the mounting rail coupling portion 42 within the mounting rail 17.

One protrusion 44 of each pair of protrusions 44, 45 protrudes from a first side 46 of the mounting rail coupling portion 42, and one protrusion 45 of each pair of protrusions 44, 45 protrudes from a second side 48 of the mounting rail coupling portion 42. The pairs of wing-shaped protrusions 44, 45 are symmetrical with respect to a longitudinal center axis of the mounting rail coupling portion 42.

Only a small portion of one of the protrusions 45 of a first pair of protrusions 44, 45, which protrudes from the second side 48 of the mounting rail coupling portion 42, is visible on the right side of Figure 5.

Only a small portion of one protrusion 44 of a second pair of protrusions 44, 45 is visible at an opposite end of the mounting rail coupling portion 42, which is shown on the left side of Figure 5.

A third pair of protrusions 44, 45, protruding from a central portion of the mounting rail coupling portion 42, is not visible in Figure 5, as it is covered by a seat coupling portion 50, which is formed on a top surface 49 of the mounting rail coupling portion 42.

Each of the protrusions 44, 45 may have a longitudinal extension or length in the range of between 5 mm and 80 mm in the longitudinal direction LD. Each of the protrusions 44, 45 may protrude by an extension in the range of between 5 mm and 80 mm from the first side 46 or from the second side 48 of the mounting rail coupling portion 42 in the transverse direction TD.

The aircraft seat connector 40 further comprises a fixing mechanism 68, which is provided at the mounting rail coupling portion 42 and which is configured for fixing the mounting rail coupling portion 42 to a mounting rail 17. The fixing mechanism 68 may in particular be a spring driven fast fixing mechanism, which allows for securely fixing the mounting rail coupling portion 42 to the mounting rail 17, employing the elastic force provided by a spring, and which further allows for releasing the mounting rail coupling portion 42 from the mounting rail 17 in a fast and convenient manner, for example by lifting a portion of the fast fixing mechanism in the height direction HD.

Employing such a spring driven fast fixing mechanism may allow for changing the seat configuration in the aircraft cabin 16 and/or replacing at least some of the aircraft seats 20 in a fast and convenient manner.

Mounting an aircraft seat 20 to mounting rails 17, which are provided at a floor of an aircraft cabin 16 of an aircraft 2, such as an airplane or a helicopter, may include introducing the mounting rail coupling portions 42 of multiple aircraft seat connectors 40, in particular the mounting rail coupling portions 42 of four aircraft seat connectors 40, into one or more mounting rails 17 for mounting the aircraft seat connectors 40 to the one or more mounting rails 17, in particular to two mounting rails 17.

The seat coupling portion 50 of the base element 41 is formed on a central portion of the top surface 49 of the mounting rail coupling portion 42.

The seat coupling portion 50 comprises a coupling surface 52, in particular a planar coupling surface 52, and two side walls 54a, 54b, extending from opposite edges of the coupling surface 52. The two side walls 54a, 54 extend in particular substantially perpendicular from the coupling surface 52 in the height direction HD.

The coupling surface 52 may have an extension in the range of between 10 mm and 100 mm in a first dimension, which is along the longitudinal direction LD. The coupling surface 52 may further have an extension in the range of between 10 mm and 100 mm in a second dimension, which is along the transverse direction TD.

In the exemplary embodiment of Figures 5 and 6, the coupling surface 52 is quadratic. The coupling surface 52 may in particular be a quadratic coupling surface 52 having an extension in the range of between 10 mm x 10 mm and 100 mm x 100 mm.

Each of the two opposing side walls 54a, 54b comprises a lower wall portion 56a, 56b, extending from the coupling surface 52, and an upper fastening portion 58a, 58b, which is formed at an upper end portion of the respective side wall 54a, 54b opposite to coupling surface 52.

The upper fastening portion 58a, 58b of each of the two opposing side walls 54a, 54b may include a protrusion, extending over the coupling surface 52, forming an undercut between the respective upper fastening portion 58a, 58b and the coupling surface 52. Each protrusion extends along the respective lower wall portion 56a, 56b in the longitudinal direction LD, forming an extended undercut that runs along a side portion of the coupling surface 52 in the longitudinal direction LD.

The aircraft seat connector 40 further comprises a seat connection element 60, which is configured for being releasably coupled with an aircraft seat 20, in particular with a mounting portion 23 of an aircraft seat 20, as it is depicted in Figures 3, 4A and 4B.

The seat connection element 60, which is arranged on the coupling surface 52 in Figures 5 and 6, comprises a seat connection portion 62, which is configured for being releasably coupled to the aircraft seat 20, in particular to the mounting portion 23 of the aircraft seat 20.

In the embodiment depicted in Figures 5 and 6, the seat connection portion 62 comprises a single opening 64, in particular a single bore or through hole, for receiving a corresponding fastening element 25 (see Figs. 3, 4A and 4B), such as a screw or a bolt, for coupling the seat connection portion 62 to the mounting portion 23 of the aircraft seat 20. The fastening element 25 is not shown in Figures 5 and 6 for clarity of illustration.

The seat connection element 60 further comprises a mating portion 65, which is configured for being received by the seat coupling portion 50 of the base element 41.

In the exemplary embodiment of Figures 5 and 6, the mating portion 65 comprises a coupling plate 66, which is configured for being arranged on the coupling surface 52. In particular, the coupling plate 66 may be arranged on the coupling surface 52 with two opposing edges of the coupling plate 66 being introduced into the undercuts, which are formed between the protrusions of the upper fastening portions 58a, 58b of the opposing side walls 54a, 54b and the coupling surface 52 of the seat coupling portion 50.

In the exemplary embodiment of Figures 5 and 6, the coupling plate 66 has a quadratic shape, and the dimensions of the coupling plate 66 allow for arranging the coupling plate 66 on the coupling surface 52 in four different orientations. In the four different orientations, the coupling plate 66 is rotated by 90 ° around an axis A, which extends along the height direction HD, with respect to a respective previous orientation.

In the embodiment depicted in Figures 5 and 6, the seat connection element 60 has a rotational symmetry of 180° with respect to the axis A. The seat connection element 60 may also be said to have reflection symmetry with respect to a plane of symmetry orthogonal to the coupling plate 66 and going through the seat connection portion 62.

With such symmetry, two orientations of the seat connection element 60, which differ from each other only in that the seat connection element 60 is rotated by 180 ° around the axis A, are not distinguishable from each other. The two orientations of the seat connection element 60, which differ from each other only in that the seat connection element 60 is rotated by 180 ° around the axis A, are therefore considered as a single spatial orientation of the seat connection element 60 with respect to the seat coupling portion 50.

In consequence, only two different spatial orientations of the seat connection element 60, which differ from each other in that the seat connection element 60 is rotated by 90 ° around the axis A, will be discussed in the following.

The seat connection element 60 may be arranged on the seat coupling portion 50 in a first orientation, which is depicted in Figures 5 and 6, in which the opening 64, formed within the seat connection portion 62, extends in the transverse direction TD, perpendicular to the longitudinal direction LD.

Alternatively, the seat connection element 60 may be arranged on the seat coupling portion 50 in a second orientation, in which the seat connection element 60 is rotated by 90 ° with respect to the orientation depicted in Figures 5 and 6, so that the opening 64, formed within the seat connection portion 62, is aligned with the longitudinal direction LD.

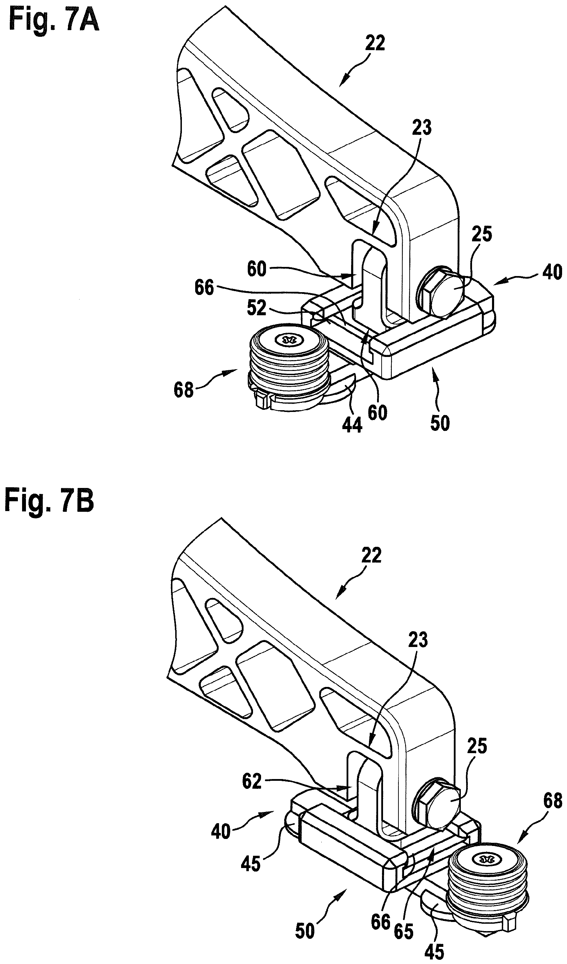

Figure 7A depicts the aircraft seat connector 40 of Figures 5 and 6, when mounted to a support leg 22 of an aircraft seat 20 (not shown), with the seat connection element 60 being arranged on the seat coupling portion 50 in the first orientation, as it is depicted in Figures 5 and 6.

Figure 7B depicts the aircraft seat connector 40 of Figures 5 and 6, when mounted to a support leg 22 of the aircraft seat 20, with the seat connection element 60 being arranged on the seat coupling portion 50 in the second orientation.

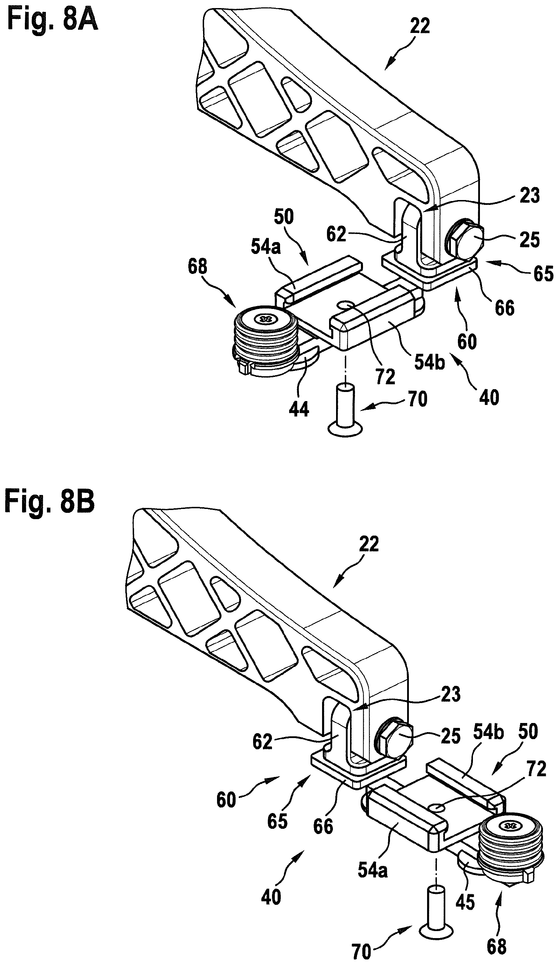

Figure 8A depicts the aircraft seat connector 40 and the support leg 22 of the aircraft seat in the orientation shown in Figure 7A, with the coupling plate 66 not being arranged on the coupling surface 52.

Figure 8B depicts the aircraft seat connector 40 and the support leg 22 of the aircraft seat in the orientation shown in Figure 7B, with the coupling plate 66 not being arranged on the coupling surface 52.

Figures 8A and 8B illustrate that, in each of the two different potential spatial orientations, the coupling plate 66 may be arranged on the coupling surface 52 of the seat coupling portion 50 in a linear motion, in which the coupling plate 66 slides along the coupling surface 52 into the gap, which is formed between the two opposing side walls 54a, 54b.

With said linear motion, two opposing edges of the coupling plate 66 are introduced into the undercuts, which are formed between the protrusions of the upper fastening portions 58a, 58b of the two opposing side walls 54a, 54b and the coupling surface 52 of the seat coupling portion 50, as it is illustrated in Figures 5, 6, 7A and 7B.

The aircraft seat connector 40 further comprises at least one fixing element 70, which is shown in Figures 6, 8A, and 8B, for releasably fixing the seat connection element 60 to the base element 41, in particular to the seat coupling portion 50 of the base element 41, after the coupling plate 66 has been arranged in the desired position and orientation on the coupling surface 52. The at least one fixing element 70 may be a bolt or a screw.

The at least one fixing element 70 may in particular extend from a bottom of the base element 41 through an opening 72, which is formed in the base element 41, into the seat connection element 60.

The at least one fixing element 70 may in particular extend into a blind hole 74, which is formed within the seat connection element 60, and which is open to the side of the seat connection element 60 facing the base element 41.

The at least one fixing element 70 and the blind hole 74 may be provided with corresponding threads, which allow for fixing the at least one fixing element 70 within the blind hole 74 by screwing the fixing element 70 into the blind hole 74.

In further embodiments, which are not explicitly depicted in the figures, the aircraft seat connector 40 may comprise a plurality of fixing elements that extend through a plurality of openings, formed in the base element 41, and into the seat connection element 60.

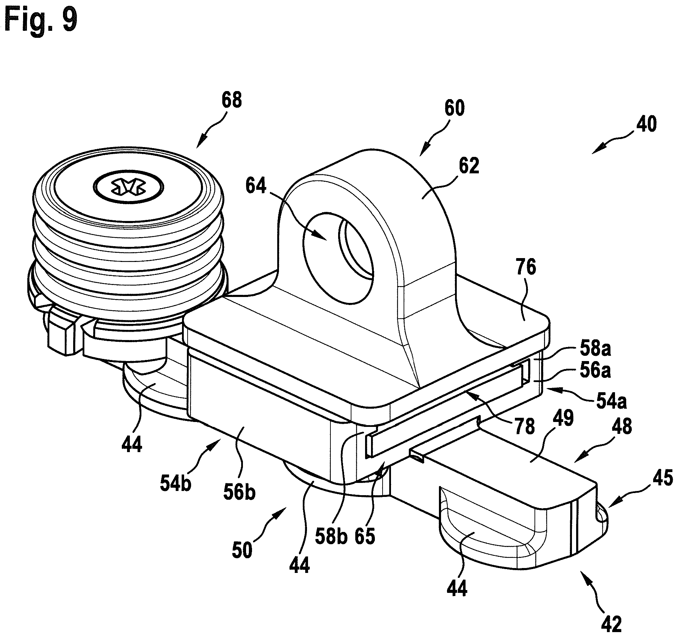

Figure 9 shows a perspective view of an aircraft seat connector 40 according to a further exemplary embodiment of the invention.

The features of the aircraft seat connector 40, as depicted in Figure 9, that correspond to the features of the embodiment, as depicted in Figures 5 to 8B, are denoted with the same reference signs and will not be discussed in detail again.

The description of these common features, provided with reference to Figures 5 to 8B, applies to the embodiment depicted in Figure 9 in an analogous manner.

The embodiment of the aircraft seat connector 40, as depicted in Figure 9, differs from the embodiment of the aircraft seat connector 40, as depicted in Figures 5 to 8B, in that the mating portion 65 of the seat connection element 60 comprises a slot arrangement 78 for receiving the protrusions of the upper fastening portions 58a, 58b of the two opposing side walls 54a, 54b of the seat coupling portion 50.

In the embodiment depicted in Figure 9, the slot arrangement 78 is formed between the coupling plate 66 of the seat connection element 60 and a support plate 76 of the seat connection portion 62 of the seat connection element 60.

The slot arrangement 78 is in particular provided as a peripheral slot arrangement 78, comprising four slots, extending along the outer periphery of the mating portion 65.

In each of the four possible orientations of the mating portion 65 of the seat connection element 60 with respect to the seat coupling portion 50, two of the four slots, which are formed on opposite peripheral surfaces of the seat connection element 60, are positioned for receiving one of the protrusions formed by the upper fastening portions 58a, 58b of the two opposing side walls 54a, 54b.

When the seat connection element 60 is introduced into the seat coupling portion 50 in a linear sliding motion, as it has been discussed before with reference to Figures 8A and 8B, the two protrusions of the upper fastening portions 58a, 58b are introduced into two opposite slots of the slot arrangement 78, as it is depicted in Figure 9.

The engagement between the protrusions of the upper fastening portions 58a, 58b and the slot arrangement 78, formed at the outer periphery of the mating portion 65 of the seat connection element 60, may add additional strength to the coupling between the seat connection element 60 and the seat coupling portion 50 of the base element 41.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed, but that the invention will include all embodiments falling within the scope of the appended claims.

## Claims

1. Aircraft seat connector (40) for mounting an aircraft seat (20) to a mounting rail (17) provided at a floor of an aircraft cabin (16), the aircraft seat connector (40) comprising:
a seat connection element (60) for being mounted to the aircraft seat (20); and
a base element (41) for being mounted to the mounting rail (17);
wherein the base element (41) comprises a seat coupling portion (50), which is configured for receiving a mating portion (65) of the seat connection element (60) in at least two different spatial orientations, with the seat coupling portion (50) thus allowing for arranging the seat connection element (60) on the base element (41) in at least two different spatial orientations.

2. Aircraft seat connector (40) according to claim 1,
wherein the seat coupling portion (50) comprises a coupling surface (52) and two side walls (54a, 54b), extending from opposite edges of the coupling surface (52),
wherein the two opposing side walls (54a, 54b) in particular extend substantially perpendicularly from the coupling surface (52).

3. Aircraft seat connector (40) according to claim 2,
wherein the coupling surface (52) is quadratic; and/or
wherein the coupling surface (52) has a first extension in the range of between 10 mm and 100 mm in a first dimension and a second extension in the range of between 10 mm and 100 mm in a second dimension.

4. Aircraft seat connector (40) according to claim 2 or 3,
wherein each of the two opposing side walls (54a, 54b) comprises a lower wall portion (56a, 56b), extending from the coupling surface (52), and an upper fastening portion (58a, 58b);
wherein the upper fastening portion (58a, 58b) of each of the two opposing side walls (54a, 54b) in particular comprises a protrusion, extending over the coupling surface (52) and forming an undercut between the upper fastening portion (58a, 58b) and the coupling surface (52).

5. Aircraft seat connector (40) according to any of the preceding claims, further comprising a fixing element (70), for example a bolt or a screw, for releasably fixing the seat connection element (60) to the base element (41).

6. Aircraft seat connector (40) according to any of the preceding claims,
wherein the mating portion (65) comprises a coupling plate (66), which is configured for being received by the seat coupling portion (50) of the base element (41) in at least two different spatial orientations;
wherein the coupling plate (66) is in particular configured for being introduced into the undercuts formed between the coupling surface (52) and the protrusions (44, 45) of the two opposing side walls (54a, 54b) of the seat coupling portion (50).

7. Aircraft seat connector (40) according to claim 6, wherein the mating portion (65) comprises a slot arrangement (78) for receiving the protrusions (44, 45) of the two opposing side walls (54a, 54b).

8. Aircraft seat connector (40) according to any of the preceding claims,
wherein the seat connection element (60) comprises a seat connection portion (62), which is configured for being coupled to the aircraft seat (20);
wherein the seat connection portion (62) in particular comprises an opening (72) for receiving a fastening element (25), such as a screw or a bolt, for coupling the seat connection element (60) to the aircraft seat (20).

9. Aircraft seat connector (40) according to any of the preceding claims, wherein the seat coupling portion is configured for receiving the mating portion of the seat connection element in two different spatial orientations, wherein said two different spatial orientations differ in a rotation of the mating portion of the seat connection element by approximately 90°.

10. Aircraft seat connector (40) according to any of the preceding claims,
wherein the base element (41) comprises a mounting rail coupling portion (42) for being introduced into the mounting rail (17);
wherein the mounting rail coupling portion (42) has a longitudinal extension, extending along a longitudinal extension of the mounting rail (17), and a transverse extension perpendicular to said longitudinal extension;
wherein the mounting rail coupling portion (42) in particular has a longitudinal extension in the range of between 20 mm and 390 mm; and/or
wherein the mounting rail coupling portion (42) in particular has a transverse extension in the range of between 20 mm and 130 mm.

11. Aircraft seat connector (40) according to claim 10,
wherein the mounting rail coupling portion (42) comprises at least one pair of wing-shaped protrusions (44, 45), protruding laterally form the mounting rail coupling portion (42) and being configured to slide into corresponding undercuts of the mounting rail (17); and/or
wherein the base element (41) comprises a fixing mechanism (68) for fixing the mounting rail coupling portion (42) to the mounting rail (17), wherein the fixing mechanism (68) is in particular a spring driven fast fixing mechanism (68).

12. Aircraft seat connector (40) according to any of the preceding claims, wherein the aircraft seat connector (40) is a helicopter seat connector for mounting a helicopter seat to a mounting rail (17) provided at the floor of a helicopter cabin (16).

13. Aircraft seat (20) comprising:
a mounting portion (23) configured for coupling the aircraft seat (20) to the seat connection element (60) of an aircraft seat connector (40) according to any of the preceding claims.

14. Aircraft (2) comprising:
an aircraft cabin (16) for accommodating at least one pilot and/or at least one passenger;
at least one mounting rail (17), provided at a floor of the aircraft cabin (16); and
at least one aircraft seat (20);
wherein the at least one aircraft seat (20) is mounted to the at least one mounting rail (17) employing at least one aircraft seat connector (40) according to any of claims 1 to 12.

15. Method of mounting an aircraft seat (20) to a mounting rail (17) provided at a floor of an aircraft cabin (16) of an aircraft (2), the method comprising the following steps:
mounting a base element (41) of an aircraft seat connector (40) to the mounting rail (17), wherein mounting the base element (41) to the mounting rail (17) in particular includes introducing a mounting rail coupling portion (42) of the base element (41) into the mounting rail (17);
mounting a seat connection element (60) of the aircraft seat connector (40) to the aircraft seat (20), in particular to a mounting portion (23) of the aircraft seat (20); and
coupling the seat connection element (60) to a seat coupling portion (50) of the base element (41), with the seat coupling portion (50) receiving a mating portion (65) of the seat connection element (60) in a particular one of at least two different potential spatial orientations.
